# EUROPÄISCHE PATENTSCHRIFT

(11) **EP 3 034 920 B1**
(45) Veröffentlichungstag und Bekanntmachung des Hinweises auf die Patenterteilung: **30.06.2021**
(21) Anmeldenummer: 15198140.4
(22) Anmeldetag: 07.12.2015
(51) Int. Cl.: F16L 11/04, C08J 7/04, F16L 11/12

(54) **ROHR SOWIE VERFAHREN ZUR HERSTELLUNG EINES ROHRS**
TUBE AND METHOD FOR MAKING A TUBE
TUBE ET PROCEDE DE FABRICATION D'UN TUBE

(30) Priorität: 16.12.2014 DE 102014226110
(43) Veröffentlichungstag der Anmeldung: 22.06.2016
(73) Patentinhaber: ContiTech MGW GmbH, 34346 Hann. Münden (DE)
(72) Erfinder: Dettlaff, Martina, 99817 Eisenach (DE); Mahnken, Claus-Lueder, 27367 Ahausen (DE); Reck, Siegfried, 31582 Nienburg (DE)
(74) Vertreter: Continental Corporation

(56) Entgegenhaltungen:
- EP-A1- 2 759 854
- EP-B1- 0 869 304
- DE-A1- 3 327 975
- DE-A1- 3 327 975
- DE-C2- 3 511 801
- US-A- 5 360 037

## Beschreibung

Die Erfindung betrifft ein Rohr mit einer mehrschichtigen Wandung.

Rohre mit einer mehrschichtigen Wandung sind grundsätzlich aus dem Stand der Technik bekannt. Bei einem Rohr handelt es sich zumeist um einen länglichen, zylindrischen Hohlkörper mit einem ringförmigen Querschnitt. So kann das Rohr als ein Schlauch ausgestaltet sein. Bevorzugt ist der Querschnitt kreisringförmig oder ovalringförmig. Die Wandung des Rohrs bildet den zugehörigen Mantel. Um zu verhindern, dass ein das Rohr durchströmendes Fluid mantelseitig austritt, ist es eine besonders fluiddichte, insbesondere gasdichte, Wandung wünschenswert. In der Praxis haben sich deshalb Rohre mit mehrschichtigen Wandungen als vorteilhaft erwiesen. Eine derartige Wandung weist also mehrere, aufeinander aufgetragene Schichten auf. Vorzugsweise sind die Schichten koaxial zueinander ausgestaltet.

Ob eine Wandung gegenüber dem durch das Rohr strömende Medium auch bei einem hohen Mediumdruck dicht oder zumindest im Wesentlichen dicht ist, kann von dem Material der Schichten der Wandung und dem durchströmenden Medium abhängen. Ist es beispielsweise vorgesehen, ein niedermolekulares Gas, wie Kohlendioxid, durch das Rohr strömen zu lassen, so hat sich als vorteilhaft erwiesen, wenn zumindest eine Schicht der Wandung als Metallschicht ausgestaltet ist, die ein Austreten von dem niedermolekularen Gas durch die Wandung des Rohrs effektiv verhindert. Denn die kristalline Gitterstruktur der Metallschicht verhindert, dass niedermolekulare Gase die Metallschicht durchdringen. Die Metallschicht weist außerdem eine hohe Steifigkeit auf, so dass das Rohr einem hohen Mediumdruck störungsfrei standhalten kann. Eine derartige Metallschicht der Wandung schränkt jedoch die Verformbarkeit der Rohrs stark ein. So lassen sich derartige Rohre praktisch kaum mit kleinen Biegeradien herstellen. In der Praxis wurde deshalb festgestellt, dass Rohre, deren Wandung mindestens eine Metallschicht aufweist, für Kohlendioxid-Klimageräte in Kraftfahrzeugen ungünstig handhabbar und/oder montierbar sind.

Um Rohre mit kleinen Biegeradien herzustellen, haben sich deshalb Elastomerschichten für die Wandung des Rohrs als vorteilhaft erwiesen. Denn das Elastomer der Schichten weist eine hohe Dehnbarkeit auf, so dass sich das Rohr auch mit einem kleinen Biegeradius herstellen lässt. Dabei ist jedoch darauf zu achten, dass die Wandstärke der Wandung nicht zu groß wird. Denn mit steigender Wandstärke sinkt auch die Biegbarkeit eines derartigen Rohrs. Um die Wandstärke der Wandung des Rohrs klein zu halten, werden die Schichten der Wandung oftmals mit einem Gewebe verstärkt. Das Gewebe weist eine höhere Zugsteifigkeit als das Elastomer der Schichten der Wandung auf. Ein derartiges Rohr kann deshalb auch einem hohen Mediumdruck standhalten. Strömt durch das Rohr nun allerdings ein niedermolekulares Gas, wie beispielsweise Kohlendioxid, diffundiert ein Teil des niedermolekularen Gases durch die Wandung des Rohrs. So können beispielsweise Kohlendioxid-Moleküle durch die Wandung des Rohrs austreten. Gewebeverstärkte, elastomere Schichten, die eine Wandung für ein Rohr mit einer geringen Wandstärke bilden, weisen deshalb eine geringe Dichtigkeit gegenüber niedermolekularen Gasen auf. Deshalb sind derartige Rohre praktisch kaum zum Transport von niedermolekularen Gasen geeignet.

Die Aufgabe der Erfindung die Bereitstellung von einem möglichst gut biegbaren Rohr mit einer mehrschichtigen Wandung, wobei das Rohr zum möglichst verlustfreien Leiten bzw. Transport von niedermolekularen Gasen unter hohem Druck geeignet sein soll.

Gemäß einem ersten Aspekt wird die Aufgabe gelöst durch ein Rohr mit einer mehrschichtigen Wandung, wobei eine erste Schicht der Wandung einen elastomeren Träger mit verteilt angeordneten Metallteilchen aufweist, eine zweite Schicht der Wandung einen elastomere Träger mit verteilt angeordneten Metallteilchen aufweist, die Metallteilchen der ersten Schicht zu den Metallteilchen der zweiten Schicht überlappend angeordnet sind, und die Metallteilchen der ersten Schicht zu den Metallteilchen der zweiten Schicht in Axial- und/oder Umfangsrichtung versetzt angeordnet sind.

Der Erfindung liegt der Gedanke zu Grunde, die Vorteile einer Rohr-Wandung mit einer Metallschicht, nämlich die hohe Dichtigkeit gegenüber unter hohem Druck stehenden, niedermolekularen Gasen, und die Vorteile einer Elastomerschicht einer Rohr-Wandung, und zwar die gute Biegbarkeit mit kleinen Biegeradien, zu kombinieren. Hierzu könnte der Versuch unternommen werden, eine sehr dünne Metallschicht für die Wandung des Rohrs vorzusehen. Die Wandung könnte sodann gegenüber den niedermolekularen Gasen besonders gasdicht sein. Allerdings würde die sehr dünne, metallische Schicht bei einer Biegung mit einem kleinen Biegeradius reißen, wodurch die metallische Schicht und infolgedessen auch die Wandung ihre dichtende Wirkung gegenüber niedermolekularen Gasen verliert. Erfindungsgemäß ist es deshalb vorgesehen, anstatt einer ununterbrochenen, metallischen Schicht mindestens zwei Schichten vorzusehen, die jeweils einen elastomere Träger mit verteilt angeordneten Metallteilchen aufweisen. Die Metallteilchen weisen jeweils einen hohen Widerstand gegen Diffusion von niedermolekularen Gasen auf. Mit anderen Worten sind die Metallteilchen besonders gasdicht. Von dem Elastomerträger der jeweiligen Schicht werden die Metallteilchen gehalten. Dabei sind die Metallteilchen der ersten Schicht zu den Metallteilchen der zweiten Schicht überlappend angeordnet. So kann beispielsweise eine radial innenseitige Fläche eines Metallteilchen der ersten Schicht eine radial außenseitige Fläche eines Metallteilchen der zweiten Schicht zumindest teilweise überlappen, oder umgekehrt. Die Überlappung findet also zwischen den Metallteilchen der ersten Schicht und der Metallteilchen der zweiten Schicht statt. Außerdem ist es vorgesehen, dass die Metallteilchen der ersten Schicht zu den Metallteilchen der zweiten Schicht in Axialrichtung und/oder Umfangsrichtung versetzt angeordnet sind. Dabei ist die Axialrichtung des Rohrs bzw. die Umfangsrichtung des Rohrs gemeint.

Mit der Überlappung und dem Versatz der Metallteilchen aus den beiden Schichten werden sich in Radialrichtung geradlinig erstreckende, rein elastomere Wandungsabschnitte verhindert oder zumindest stark verringert. Denn durch die Überlappung und den Versatz der Metallteilchen wird die Wahrscheinlichkeit stark erhöht, dass ein niedermolekularer Gas-Diffusionsstrom auf eines der Metallteilchen trifft. Das entsprechende Metallteilchen verhindert sodann, dass sich der Gas-Diffusionsstrom in Radialrichtung weiter ausbreitet. Vielmehr wird der Gas-Diffusionsstrom gezwungen sich zumindest im Wesentlichen parallel zu dem Metallteilchen fortzusetzen. Die Metallteilchen vergrößern deshalb den effektiv wirksamen Weg für einen Gas-Diffusionsstrom durch die Wandung des Rohrs. Dies erhöht den Widerstand gegen die Gas-Diffusion. Zudem wird der Gas-Diffusionsstrom auf Bereiche zwischen den Metallplättchen konzentriert, was den Widerstand gegen die Gas-Diffusion weiter erhöht.

Indem die Metallplättchen den Widerstand gegen die Gas-Diffusion erhöhen, kann die Schichtdicke der zugehörigen Schichten besonders klein ausgestaltet sein. Zudem bilden die Metallteilchen einer Schicht keinen ununterbrochenen, zylindrischen Körper. Vielmehr sind die Metallplättchen durch Elastomer des Elastomerträgers voneinander beanstandet. Die beiden Schichten der Wandung mit dem jeweiligen elastomere Träger und den darin verteilt angeordneten Metallplättchen können deshalb besonders gut und zerstörungsfrei gedehnt und/oder gestaucht werden. Dabei können sich die Metallplättchen in der jeweiligen Schicht verschieben. Dies wird im Wesentlichen durch den elastomeren Träger gewährleistet. Das Rohr mit einer entsprechenden, mehrschichtigen Wandung kann deshalb auch zu Bögen mit kleinen Biegeradien zerstörungsfrei verformt werden. Der Widerstand gegen die Gas-Diffusion von niedermolekularen Gasen durch die Wandung des Rohrs bleibt dabei zumindest im Wesentlichen erhalten.

Eine vorteilhafte Ausgestaltung des Rohrs zeichnet sich dadurch aus, dass sich Metallteilchen der ersten Schicht und Metallteilchen der zweiten Schicht zu mindestens 50% überlappen. Grundsätzlich kann sich ein Metallteilchen der ersten Schicht vollständig mit einem Metallteilchen der zweiten Schicht überlappend. Dies kann beispielsweise dann erfolgen, wenn die dem Metallteilchen der zweiten Schicht zugewandten Oberfläche des Metallteilchens aus der ersten Schicht deutlich kleiner ist als die korrespondierende Oberfläche des Metallteilchens aus der zweiten Schicht. Aufgrund des Versatzes der Metallteilchen aus der ersten Schicht zu den Metallteilchen aus der zweiten Schicht kommt es jedoch oftmals zu einer Teilüberlappung. Der Anteil der Überlappung entspricht dabei dem Anteil der einander überlappenden Oberflächen von einem Metallteilchen der ersten Schicht und einem Metallteilchen der zweiten Schicht. Eine Überlappung von mindestens 50 % hat sich dabei als vorteilhaft erwiesen, um die Überlappung auch dann aufrecht zu erhalten, wenn das Rohr gebogen oder anders elastisch verformt wird. Besonders bevorzugt ist eine Überlappung von mindestens 60 % oder mindestens 70 %.

Eine weitere vorteilhafte Ausgestaltung des Rohrs zeichnet sich dadurch aus, dass eine kumulierte Querschnittsfläche der Metallteilchen in dem jeweils zugehörigen Träger mindestens 70 % einer Mantelfläche der jeweils zugehörigen Schicht entspricht. Die Metallteilchen können somit einen entsprechend hohen Teil der Mantelfläche der jeweiligen Schicht metallisch abdecken. Um den Anteil noch weiter zu erhöhen, kann es vorgesehen sein, dass die kumulierte Querschnittsfläche der Metallteilchen in dem jeweils zugehörigen Träger mindestens 80 %, mindestens 90 %, mindestens 100 % oder mindestens 110 % der Mantelfläche der jeweils zugehörigen Schicht entspricht. Insbesondere für den Fall, dass die kumulierte Querschnittsfläche auf 110 % oder mehr erhöht ist, kann mit einer sehr hohen Wahrscheinlichkeit davon ausgegangen werden, dass die gesamte Mantelfläche der jeweiligen Schicht metallisch abgedeckt ist. Dabei wird von den Metallteilchen keine durchgehende Metallschicht gebildet, sondern die Metallteilchen schließen durch ein Elastomer des zugehörigen, elastomeren Trägers voneinander getrennt aneinander an. Die Metallteilchen in derselben Schicht können dabei einander teilweise überlappen. Erfindungsgemäß sind für die Wandung des Rohrs mindestens zwei Schichten vorgesehen, die jeweils einen elastomere Träger mit verteilt angeordneten Metallteilchen aufweisen. Werden beide Schichten nach Art der zuvor genannten Ausgestaltung ausgeführt, erhöht dies die Wahrscheinlichkeit, dass ein niedermolekularer Gas-Diffusionsstrom auf mindestens eins der Metallteilchen in einer der beiden Schichten trifft, was den Diffusionswiderstand für den entsprechenden Gas-Diffusionsstrom erhöht.

Eine weitere vorteilhafte Ausgestaltung des Rohrs zeichnet sich dadurch aus, dass jeweils zwei benachbarte Metallteilchen aus einer gemeinsamen Schicht durch jeweils einen von dem zugehörigen Träger gebildeten Beabstandungsabschnitt getrennt sind, wobei die Beabstandungsabschnitte der ersten Schicht zu den Beabstandungsabschnitten der zweiten Schicht in Axial- und/oder Umfangsrichtung versetzt angeordnet sind. Die erste Schicht und die zweite Schicht der Wandung weisen jeweils einen elastomeren Träger mit verteilt angeordneten Metallteilchen auf. Die Metallteilchen einer Schicht sind in dem jeweiligen Träger vorzugsweise voneinander beanstandet angeordnet. Dazu ist zwischen den Metallteilchen einer Schicht jeweils ein Elastomer vorgesehen das von dem Elastomerträger gebildet wird. Zwei in einer Schicht benachbarte Metallteilchen werden deshalb von einem so genannten Beabstandungsabschnitt voneinander getrennt, der von dem jeweils zugehörigen elastomeren Träger gebildet ist. Von einem elastomere Träger wird deshalb eine Vielzahl von Beabstandungsabschnitten gebildet. Aufgrund ihrer elastomeren Eigenschaft kann ein niedermolekularer Gas-Diffusionsstrom durch die Beabstandungsabschnitte mit einem geringen Diffusionswiderstand diffundieren. Um nun zu verhindern, dass ein Gas-Diffusionsstrom mit dem genannten, geringeren Diffusionswiderstand in Radialrichtung geradlinig durch die mehrschichtigen Wandung des Rohrs diffundiert, sind die Beabstandungsabschnitte der beiden Schichten zueinander versetzt angeordnet. Der Versatz der Beabstandungsabschnitte dient also dazu, dass der Gas-Diffusionsstrom stattdessen auf eines der Metallteilchen trifft und sodann um das Metallteilchen bogenförmig herumführt, so dass der Diffusionswiderstand der Wandung für den entsprechenden Gas-Diffusionsstrom erhöht ist. Dies erhöht die Gasdichtigkeit des Rohrs.

Eine weitere vorteilhafte Ausgestaltung des Rohrs zeichnet sich dadurch aus, dass die Beabstandungsabschnitte der ersten Schicht von den Metallplättchen der zweiten Schicht überlappt sind. Die umgekehrte Ausgestaltung kann ebenfalls vorgesehen sein, so dass die Beabstandungsabschnitte der zweiten Schicht von den Metallplättchen der ersten Schicht überlappend. Tritt nun ein Gas-Diffusionsstrom mit einem geringeren Diffusionswiderstand durch den Beabstandungsabschnitt, trifft der Gas-Diffusionsstrom daraufhin auf ein Metallteilchen. Damit erhöht sich der effektive Diffusionswiderstand der Wandung. Dies erhöht die Gasdichtigkeit des Rohrs.

Eine weitere vorteilhafte Ausgestaltung des Rohrs zeichnet sich dadurch aus, dass die Metallteilchen als Metallplättchen jeweils mit einer mittleren Dicke von 0,5µm bis 5µm und/oder einem mittleren Durchmesser von 10µm bis 250µm ausgestaltet sind. In der Praxis wurde festgestellt, dass besonders kleine Metallteilchen, insbesondere wenn sie als Metallplättchen ausgestaltet sind, die zerstörungsfreie Verformbarkeit der Wandung des Rohrs, insbesondere mit einem besonders kleinen Biegeradius, begünstigt. Metallteilchen als Metallplättchen haben sich darüber hinaus auch als vorteilhaft erwiesen, da sie eine sehr geringe Dicke aufweisen können. Deshalb lässt sich die Wandung des Rohrs auch mit einer geringen Wandstärke herstellen.

Eine weitere vorteilhafte Ausgestaltung des Rohrs zeichnet sich dadurch aus, dass eine mittlere Schichtdicke jeder Schicht mit einem elastomeren Träger mit verteilt angeordneten Metallteilchen zwischen dem 1,5-fachen und dem 5-fachen der mittleren Dicke der zugehörigen Metallteilchen ist. Wie zuvor erläutert, weisen die Metallteilchen, insbesondere wenn sie als Metallplättchen ausgestaltet sind, vorzugsweise eine dicke zwischen 0,5 µm und 5 µm auf. Korrespondierend kann die Schichtdicke der ersten Schicht und/oder der zweiten Schicht beispielsweise zwischen 0,75 µm und 25 µm sein. Eine Wandung mit derartigen dünnen Schichten kann deshalb eine besonders geringe Wandstärke aufweisen, was die Verformbarkeit, insbesondere mit einem besonders kleinen Biegeradius, begünstigt.

Eine weitere vorteilhafte Ausgestaltung des Rohrs zeichnet sich dadurch aus, dass die Metallteilchen in dem jeweils zugehörigen Träger zufällig verteilt angeordnet sind. Unter einer zufälligen Verteilung wird vorzugsweise eine Normalverteilung bzw. eine Gaußverteilung verstanden. Metallteilchen aus einer Schicht können so beispielsweise einen jeweils ähnlichen Abstand zu benachbarten Metallteilchen aus der gleichen Schicht aufweisen. Dies gewährleistet, dass ein Gas-Diffusionsstrom mit einer hohen Wahrscheinlichkeit auf ein Metallteilchen trifft, was den effektiven Diffusionswiderstand der Wandung des Rohrs erhöht.

Eine weitere vorteilhafte Ausgestaltung des Rohrs zeichnet sich dadurch aus, dass die Metallteilchen als Aluminium-Metallteilchen ausgestaltet sind. Aluminium als Werkstoff für die Metallteilchen hat sich in der Praxis als besonders vorteilhaft erwiesen, da sich die Aluminium-Metallteilchen besonders gut in dem jeweiligen elastomere Träger verankern lassen.

Eine weitere vorteilhafte Ausgestaltung des Rohrs zeichnet sich dadurch aus, dass die Metallteilchen passiviert sind. So kann jedes Metallteilchen beispielsweise an der zugehörigen Oberfläche oxidiert sein. Durch die passivierte Ausgestaltung der Metallteilchen lassen sich die Metallteilchen besonders einfach in dem jeweiligen, elastomeren Träger zumindest im Wesentlichen gleichmäßig verteilen. Denn die Metallteilchen bilden aufgrund ihrer passiv ausgestalteten Oberfläche keine oder zumindest im Wesentlichen keine Van-der-Waals-Kräfte untereinander aus. Mit der verbesserten Verteilung erhöht sich die Wahrscheinlichkeit, dass ein niedermolekularer Gas-Diffusionsstrom auf eines der Metallteilchen trifft, was den effektiven Diffusionswiderstand der Wandung des Rohrs erhöht. Dies verbessert die Dichtigkeit des Rohrs.

Eine weitere vorteilhafte Ausgestaltung des Rohrs zeichnet sich dadurch aus, dass die Wandung mindestens eine weitere Schicht nach Art der ersten oder zweiten Schicht aufweist. Die Wandung kann also nicht nur die erste Schicht und die zweite Schicht mit jeweils einem elastomere Träger mit verteilt angeordneten Metallteilchen aufweisen. Vielmehr können gleichartige, weitere Schichten vorgesehen sein. So kann die Wandung beispielsweise eine dritte, eine vierte und/oder eine fünfte Schicht jeweils mit einem elastomere Träger mit verteilt angeordneten Metallteilchen aufweisen.

Eine weitere vorteilhafte Ausgestaltung des Rohrs zeichnet sich dadurch aus, dass die Wandung eine Basisschicht aufweist, auf der die erste Schicht der Wandung aufgetragen ist. Die Basisschicht kann sodann als Grundträger dienen. So kann die Basisschicht die durch den Mediumdruck hervorgerufenen Kräfte aufnehmen. Darüber hinaus kann die Basisschicht mit einem Gewebe verstärkt sein. Wie zuvor erläutert, kann die erste Schicht eine besonders geringe Schichtdicke aufweisen, so dass die Wandstärke wesentlich durch die Schichtdicke der Basisschicht bestimmt ist. Somit wird die Wandung des Rohrs nur geringfügig durch die erste Schicht hinsichtlich ihrer Verformbarkeit eingeschränkt.

Eine weitere vorteilhafte Ausgestaltung des Rohrs zeichnet sich dadurch aus, dass die Schichten mit jeweils einem elastomeren Träger mit verteilt angeordneten Metallteilchen aufeinander aufgetragen sind. Somit ist die zweite Schicht radial innenseitige oder radial außenseitig auf der ersten Schicht aufgetragen. Für die weiteren Schichten gilt entsprechendes. Die Wandung kann also beispielsweise zwei, drei, vier oder mehr Schichten aufweisen, die jeweils einen elastomeren Träger mit verteilt angeordneten Metallteilchen aufweist. In diesem Zusammenhang werden auf die vorangegangenen Erläuterungen analog Bezug genommen.

Gemäß einem weiteren Aspekt wird die eingangs genannte Aufgabe durch ein Verfahren zur Herstellung eines Rohrs mit einer mehrschichtigen Wandung gelöst, wobei eine erste Schicht aus einem elastomeren Trägermaterial mit verteilt angeordneten Metallteilchen auf einer Basisschicht der Wandung aufgetragen wird, und daraufhin mindestens eine weitere Schicht aus einem elastomeren Trägermaterial mit verteilt angeordneten Metallteilchen auf der ersten Schicht aufgetragen wird. Es werden also mehrere Schichten hintereinander auf die Basisschicht bzw. auf die jeweils zuvor entstandene Schicht der Wandung aufgetragen, so dass die mehrschichtige Wandung entsteht. Dabei handelt es sich bei den aufgetragenen Schichten jeweils um einen elastomere Träger mit verteilt angeordneten Metallteilchen. Die Metallteilchen können dazu zunächst in einer lösungsmittelhaltigen Suspension mit dem elastomeren Trägermaterial aufgetragen werden, wobei sich das Trägermaterial mit den verteilt angeordneten Metallteilchen durch ein Verdunstung des Lösungsmittels auf der jeweils aufgetragenen Schicht absetzt. Dabei gelten Merkmale, Details und Vorteile, die im Zusammenhang mit dem erfindungsgemäßen Rohr beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine schematische Querschnittsdarstellung des erfindungsgemäßen Rohrs, und
- Fig. 2: einen Ausschnitt der Querschnittsdarstellung aus Fig. 1.

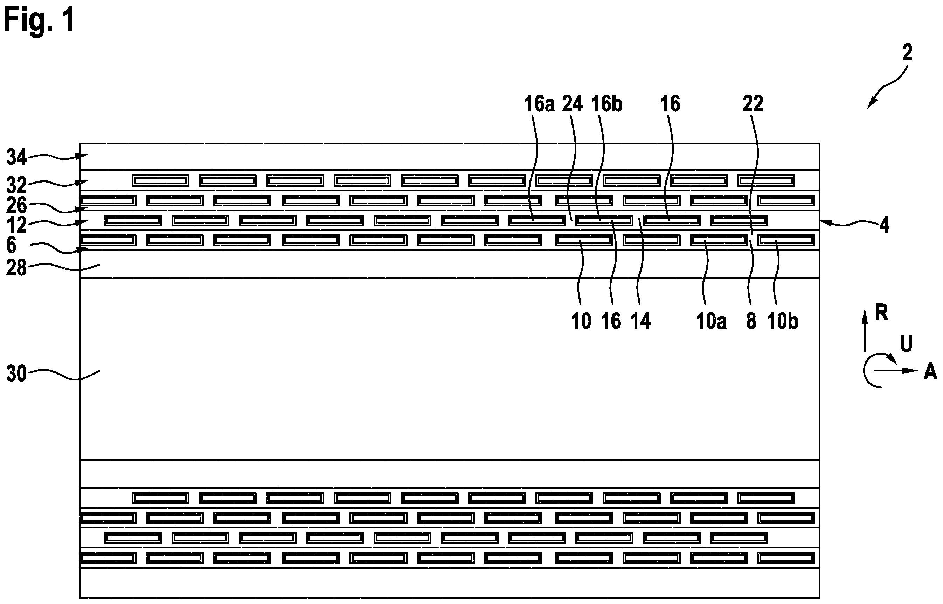

Aus der Figur 1 ist der schematische Aufbau des erfindungsgemäßen Rohrs 2 im Querschnitt zu erkennen. Das Rohr 2 weist eine zylindrische Wandung 4 auf, so dass ein Kanal 30 zum Leiten von einem Fluid, insbesondere von einem Gas und/oder einer Flüssigkeit, von der Wandung 4 gebildet ist. Das Rohr 2 bzw. der Kanal 30 ist in Axialrichtung A geöffnet. Somit kann ein Fluid an einer Stirnseite des Rohrs 2 in den Kanal 30 einströmen, von der Wandung 4 des Rohrs 2 in Axialrichtung A geleitet werden, und an der gegenüberliegenden Stirnseite des Rohrs 30 aus dem Kanal 30 ausströmen. Vorzugsweise ist das Rohr 2 als ein länglicher, zylindrischer Hohlkörper ausgestaltet. So kann das Rohr 2 beispielsweise ein Schlauch sein.

Ein derartiges Rohr 2 wird beispielsweise dazu verwendet, um ein niedermolekulares Gas, welches unter einem hohen Druck ist, zu leiten. Radial innenseitig ist die Wandung 4 des Rohrs 2 von einer Basisschicht 28 gebildet. Die Basisschicht 28 ist aus Kunststoff, insbesondere aus einem Elastomer. Die Basisschicht 28 dient dazu, die weiteren Schichten 6, 12, 26, 32, 34 der Wandung 4 vor Abrasion, also insbesondere vor Abrieb, durch das strömende Fluid zu schützen.

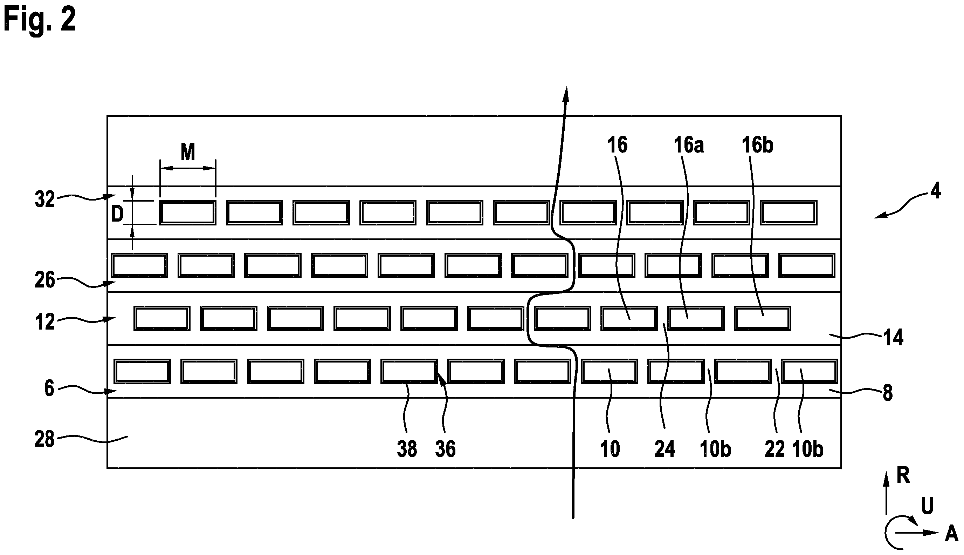

Wird das Rohr 2 zum Leiten von einem niedermolekularen Gas, wie beispielsweise Kohlendioxid, verwendet, kann das niedermolekulare Gas aufgrund der elastomere Eigenschaft der Basisschicht 28 durch diese diffundieren. Um zu verhindern, dass das niedermolekulare Gas durch die Wandung 4 des Rohrs 2 ungewollt austritt, ist radial außenseitig auf der Basisschicht 28 eine erste Schicht 6 aufgetragen. Die erste Schicht 6 weist einen elastomere Träger 8 mit verteilt angeordneten Metallteilchen 10 auf. Dabei wirkt der Träger 8 wie eine Matrix, in die die Metallteilchen 10 eingesetzt sind. Aufgrund ihrer metallischen Eigenschaften hemmen die Metallteilchen 10 den Diffusionsstrom des niedermolekularen Gas. Die Metallplättchen 10 sind jedoch in Axialrichtung A und in Umfangsrichtung U voneinander beanstandet. Zwei benachbarte Metallplättchen 10a, 10b aus der ersten Schicht 6 sind also durch ein von dem Träger 8 gebildeten Beabstandungsabschnitt 22 voneinander getrennt. Dies gilt analog für alle Paare von benachbarten Metallteilchen 10a, 10b. Aufgrund der elastomeren Eigenschaft des Trägers 8 und somit der elastomeren Eigenschaft des Beabstandungsabschnitts 22 kann das niedermolekulare Gas durch den Beabstandungsabschnitt 22 zwischen den benachbarten Metallteilchen 10a, 10b diffundieren. Um nun zu verhindern, dass ein Diffusionsstrom mit vergleichsweise geringem Diffusionswiderstand gradlinig in Radialrichtung R durch die Wandung 4 des Rohrs 2 entsteht, ist auf der ersten Schicht 6 eine zweite Schicht 12 aufgetragen. Die zweite Schicht 12 weist einen elastomeren Träger 14 mit verteilt angeordneten Metallteilchen 16 auf. Die erste Schicht 6 und die zweite Schicht 12 sind also analog zu einander ausgestaltet. Somit sind auch zwei benachbarte Metallteilchen 16a, 16 b durch einen von dem Träger 14 gebildeten Beabstandungsabschnitt 24 getrennt. Dies gilt analog für alle Paare von benachbarten Metallteilchen 16a, 16b. Aufgrund der verteilten Anordnung der Metallteilchen 10 bzw. 16 in den beiden Schichten 6, 12 kann mit einer großen Wahrscheinlichkeit sichergestellt werden, dass ein Beabstandungsabschnitt 22 aus der ersten Schicht 6 nicht in Radialrichtung R geradlinig fluchtend mit einem Beabstandungsabschnitt 24 der zweiten Schicht 12 ausgerichtet ist. Denn wie aus der Figur 2 hervorgeht, sind die Metallteilchen 10 aus der ersten Schicht 6 überlappend zu den Metallteilchen 16 der zweiten Schicht 12 angeordnet. Mit anderen Worten sind die Kanten 36 von einem Metallteilchen 10 aus der ersten Schicht 6 und einem diesen Metallteilchen 10 zugewandten Metallteilchen 16 aus der zweiten Schicht 12 nicht fluchtend in Radialrichtung R ausgerichtet. Die Metallteilchen 10 der ersten Schicht 6 sind also zu den Metallteilchen 16 der zweiten Schicht 12 in Axialrichtung A und/oder in Umfangsrichtung U versetzt angeordnet. Dies gewährleistet, dass die Beabstandungsabschnitte 22 der ersten Schicht 6 zu den Beabstandungsabschnitten 24 der zweiten Schicht 12 in Axialrichtung A und/oder in Umfangsrichtung U versetzt angeordnet sind. Diffundiert nun ein niedermolekulares Gas durch den Beabstandungsabschnitt 22 der ersten Schicht 6, trifft dies in Radialrichtung R auf ein Metallteilchen 16 der zweiten Schicht 12. Um weiter nach außen zu diffundieren, führt der Diffusionsstrom, der in Figur 2 durch die schlangenförmige Linie angedeutet ist, bogenförmig um das genannte Metallteilchen 16 aus der zweite Schicht 12. Dies verlängert den Weg durch die Wandung 4 des Rohrs 2, so dass sich der effektive Widerstand gegen die Diffusion von niedermolekulare Gas durch die Wandung 4 erhöht. Je größer der Widerstand gegen die Diffusion von niedermolekularem Gas ist, desto größer ist die Dichtigkeit der Wandung 4 des Rohrs 2.

Um die Dichtigkeit der Wandung 4 des Rohrs 2 weiter zu erhöhen, sind für die Wandung 4 zwei weitere Schichten, nämlich die dritte Schicht 26 und die vierte Schicht 32 vorgesehen. Diese beiden Schichten 26, 32 sind jeweils analog zu der ersten Schicht 6 bzw. der zweiten Schicht 12 der Wandung 4 ausgestaltet. Durch die entsprechende Verteilung der Metallteilchen in den beiden weiteren Schichten 26, 32 kann der Diffusionsstrom beispielsweise einen schlangenförmigen Weg durch die Wandung 4 nehmen müssen, um von dem Kanal 30 nach außen zu diffundieren, wie dies beispielsweise durch die schlangenförmige Linie in Figur 2 angedeutet ist. Der Weg der schlangenförmigen Linie ist nun deutlich größer als die radiale Wandstärke der Wandung 4. Insbesondere kann der Weg um 20 % bis 80 %, oder mehr, verlängerter sein. Entsprechend größer ist der Widerstand gegen die Diffusion bzw. die Dichtigkeit der Wandung 4 des Rohrs 2.

Auf der vierten Schicht 32 ist radial außenseitig eine weitere Schicht, nämlich die Außenschicht 34 aufgetragen. Die Außenschicht 34 ist als Elastomer-Schicht ausgestaltet. Sie kann dazu als eine Art Gummierung ausgestaltet sein. Sie eignet sich also zum zerstörungsfreien Verformen des Rohrs 2. Darüber hinaus können auf der Außenschicht 34 weitere Schichten aufgetragen sein, insbesondere mindestens eine Schicht mit einem elastomere Träger, in den ein Gewebe zur Verstärkung eingebracht ist. Das Gewebe bzw. die zugehörige Schicht kann sodann zur Aufnahme von Kräften dienen, die in Radialrichtung R auf die Wandung 4, insbesondere hervorgerufen durch ein unter hohen Druck stehendes Gas in dem Kanal 30, wirken.

In der Praxis hat es sich als vorteilhaft erwiesen, wenn die Metallteilchen 10, 16 besonders klein ausgestaltet sind. So kann ein jedes Metallteilchen 10, 16 beispielsweise eine mittlere Dicke D zwischen 0,5 µm und 5 µm aufweisen. Für den Durchmesser M eines Metallteilchen 10, 16 hat sich beispielsweise ein Bereich zwischen 10 µm und 250 µm als vorteilhaft erwiesen. So ein Metallteilchen 10, 16 beispielsweise als Metallplättchen ausgestaltet sein, wobei die mittlere Dicke D etwa 2 µm und der Durchmesser M etwa 50 µm betragen. Mit der besonders kleinen Ausgestaltung der Metallteilchen 10, 16 wird die Biegbarkeit der Wandung 4 des Rohrs 2 kaum bis annähernd gar nicht behindert. Denn die Beabstandungsabschnitte 22, 24 gewährleisten, dass die Wandung 4 gedehnt und/oder gestaucht werden kann. Außerdem ist die Flächenausdehnung der Metallteilchen 10, 16 klein gegenüber einem üblichen Biegeradius des Rohrs 2, so dass die Metallteilchen bei einer Biegung nicht reißen. Vielmehr gewährleistet der Träger 8, 14 der Schichten 6, 12 bzw. 26, 32 eine Verschiebung der Metallteilchen 10 ,16 durch ein Dehnen oder Stauchen der genannten elastomere Träger 8, 14 bzw. der zugehörigen Beabstandungsabschnitte 22, 24. Somit vereint das erfindungsgemäße Rohr 2 die vorteilhafte Dichtigkeit und die gute Biegbarkeit.

Zur Herstellung der Wandung 4 haben sich passivierte Metallteilchen 10, 16 als vorteilhaft erwiesen. So kann als Metall für die Metallteilchen 10, 16 Aluminium verwendet werden. Die Metallteilchen 10, 16 können dann jeweils außenseitig oxidiert sein, um zumindest im Wesentlichen frei von van-der-Waals-Kräften zu benachbarten Metallteilchen 10, 16. Mit anderen Worten weist jedes Metallteilchen 10, 16 eine außenseitige Passivierung 38 auf. Die Metallteilchen 10, 16 lassen sich sodann besonders gut verteilen. Dazu werden die Metallteilchen 10, 16 in eine Suspension aus einem Lösungsmittel und einem Elastomer zur Bildung des jeweiligen Trägers 8, 14 gegeben. Die Schichten 6, 12, 26, 32 werden dabei nacheinander auf die Basisschicht 28 aufgetragen. Zwischen dem Auftragen der zuvor genannten Schichten 6, 12, 26, 32 erfolgt eine Trocknung der jeweils zuletzt aufgetragenen Schicht 6, 12, 26, 32 wobei das Lösungsmittel verdampft.

### Bezugszeichenliste

### (Teil der Beschreibung)

- A: Axialrichtung
- D: Dicke
- M: Durchmesser
- R: Radialrichtung
- U: Umfangsrichtung
- 2: Rohr
- 4: Wandung
- 6: erste Schicht
- 8: Träger
- 10: Metallteilchen
- 10a: Metallteilchen
- 10b: Metallteilchen
- 12: zweite Schicht
- 14: Träger
- 16: Metallteilchen
- 16a: Metallteilchen
- 16b: Metallteilchen
- 22: Beabstandungsabschnitt
- 24: Beabstandungsabschnitt
- 26: dritte Schicht
- 28: Basisschicht
- 30: Kanal
- 32: vierte Schicht
- 34: Außenschicht
- 36: Kante
- 38: Passivierung

## Patentansprüche

1. **Rohr** (2) mit
- einer mehrschichtigen Wandung (4),
**dadurch gekennzeichnet, dass**
- eine erste Schicht (6) der Wandung (4) einen elastomeren Träger (8) mit verteilt angeordneten Metallteilchen (10) aufweist,
- eine zweite Schicht (12) der Wandung (4) einen elastomere Träger (14) mit verteilt angeordneten Metallteilchen (16) aufweist,
- die Metallteilchen (10) der ersten Schicht (6) zu den Metallteilchen (16) der zweiten Schicht (12) überlappend angeordnet sind, und
- die Metallteilchen (10) der ersten Schicht (6) zu den Metallteilchen (16) der zweiten Schicht (12) in Axialrichtung A und/oder Umfangsrichtung U versetzt angeordnet sind.

2. Rohr (2) nach dem vorhergehenden Anspruch, **dadurch gekennzeichnet, dass** sich Metallteilchen (10) der ersten Schicht (6) und Metallteilchen (16) der zweiten Schicht (12) zu mindestens 50% überlappen.

3. Rohr (2) nach einem der vorhergehenden Ansprüche, **dadurch gekennzeichnet, dass** eine kumulierten Querschnittsfläche der Metallteilchen (10, 16) in dem jeweils zugehörigen Träger (8, 14) mindestens 70 % einer Mantelfläche der jeweils zugehörigen Schicht (6, 12) entspricht.

4. Rohr (2) nach einem der vorhergehenden Ansprüche, **dadurch gekennzeichnet, dass** jeweils zwei benachbarte Metallteilchen (10a, 10b, 16a, 16b) aus einer gemeinsamen Schicht (6, 12) durch jeweils einen von dem zugehörigen Träger (8, 14) gebildeten Beabstandungsabschnitt (22, 24) getrennt sind, wobei die Beabstandungsabschnitte (22) der ersten Schicht (6) zu den Beabstandungsabschnitten (24) der zweiten Schicht (12) in Axialrichtung A und/oder Umfangsrichtung U versetzt angeordnet sind.

5. Rohr (2) nach dem vorhergehenden Anspruch, **dadurch gekennzeichnet, dass** die Beabstandungsabschnitte (22) der ersten Schicht (6) von den Metallplättchen (16) der zweiten Schicht (12) überlappt sind.

6. Rohr (2) nach einem der vorhergehenden Ansprüche, **dadurch gekennzeichnet, dass** die Metallteilchen (10, 16) als Metallplättchen jeweils mit einer mittleren Dicke D von 0,5µm bis 5µm und/oder einem mittleren Durchmesser M von 10µm bis 250µm ausgestaltet sind.

7. Rohr (2) nach einem der vorhergehenden Ansprüche **dadurch gekennzeichnet, dass** eine mittlere Schichtdicke jeder Schicht (6, 12) mit einem elastomeren Träger (8, 14) mit verteilt angeordneten Metallteilchen (10, 16) zwischen dem 1,5-fachen und dem 5-fachen der mittleren Dicke D der zugehörigen Metallteilchen (10, 16) ist.

8. Rohr (2) nach einem der vorhergehenden Ansprüche, **dadurch gekennzeichnet, dass** die Metallteilchen (10, 16) in dem jeweils zugehörigen Träger (8, 24) zufällig verteilt angeordnet sind.

9. Rohr (2) nach einem der vorhergehenden Ansprüche, **dadurch gekennzeichnet, dass** die Metallteilchen (10, 16) als Aluminium-Metallteilchen ausgestaltet sind.

10. Rohr (2) nach einem der vorhergehenden Ansprüche, **dadurch gekennzeichnet, dass** die Metallteilchen (10, 16) passiviert sind.

11. Rohr (2) nach einem der vorhergehenden Ansprüche, **dadurch gekennzeichnet, dass** die Wandung (4) mindestens eine weitere Schicht (26) nach Art der ersten oder zweiten Schicht (6, 12) aufweist.

12. Rohr (2) nach einem der vorhergehenden Ansprüche, **dadurch gekennzeichnet, dass** die Wandung (4) eine Basisschicht (28) aufweist, auf der die erste Schicht (6) der Wandung (4) aufgetragen ist.

13. Rohr (2) nach einem der vorhergehenden Ansprüche, **dadurch gekennzeichnet, dass** die Schichten (6, 12, 26) mit einen elastomere Träger (8, 14) mit verteilt angeordneten Metallteilchen (10, 16) aufeinander aufgetragen sind.

14. **Verfahren** zur Herstellung eines Rohrs (2) mit einer mehrschichtigen Wandung (4), **gekennzeichnet durch**
- ein Auftragen einer ersten Schicht (6) aus einem elastomeren Trägermaterial mit verteilt angeordneten Metallteilchen (10) auf einer Basisschicht (28) der Wandung (4), und
- ein Auftragen mindestens einer weiteren Schicht (12) aus einem elastomeren Trägermaterial mit verteilt angeordneten Metallteilchen (16) auf der ersten Schicht (6).

## Claims

1. Pipe (2) having
- a multilayered wall (4),
**characterized in that**
- a first layer (6) of the wall (4) has an elastomeric carrier (8) having metal particles (10) which are arranged so as to be distributed,
- a second layer (12) of the wall (4) has an elastomeric carrier (14) having metal particles (16) which are arranged so as to be distributed,
- the metal particles (10) of the first layer (6) are arranged so as to overlap the metal particles (16) of the second layer (12), and
- the metal particles (10) of the first layer (6) are arranged so as to be offset with respect to the metal particles (16) of the second layer (12) in an axial direction A and/or circumferential direction U.

2. Pipe (2) according to the preceding claim, **characterized in that** metal particles (10) of the first layer (6) and metal particles (16) of the second layer (12) overlap to an extent of at least 50%.

3. Pipe (2) according to either of the preceding claims, **characterized in that** a cumulative cross-sectional area of the metal particles (10, 16) in the respectively associated carrier (8, 14) corresponds to at least 70% of a lateral area of the respectively associated layer (6, 12).

4. Pipe (2) according to one of the preceding claims, **characterized in that** in each case two adjacent metal particles (10a, 10b, 16a, 16b) from a common layer (6, 12) are separated in each case by a spacing portion (22, 24) which is formed by the associated carrier (8, 14), wherein the spacing portions (22) of the first layer (6) are arranged so as to be offset with respect to the spacing portions (24) of the second layer (12) in the axial direction A and/or circumferential direction U.

5. Pipe (2) according to the preceding claim, **characterized in that** the spacing portions (22) of the first layer (6) are overlapped by the metal plates (16) of the second layer (12).

6. Pipe (2) according to one of the preceding claims, **characterized in that** the metal particles (10, 16) are configured in the form of metal plates each having a mean thickness D of 0.5 µm to 5 µm and/or a mean diameter M of 10 µm to 250 µm.

7. Pipe (2) according to one of the preceding claims, **characterized in that** a mean layer thickness of each layer (6, 12) having an elastomeric carrier (8, 14) having metal particles (10, 16) which are arranged so as to be distributed is between 1.5 and 5 times the mean thickness D of the associated metal particles (10, 16).

8. Pipe (2) according to one of the preceding claims, **characterized in that** the metal particles (10, 16) in the respectively associated carrier (8, 14) are arranged so as to be randomly distributed.

9. Pipe (2) according to one of the preceding claims, **characterized in that** the metal particles (10, 16) are configured in the form of aluminium metal particles.

10. Pipe (2) according to one of the preceding claims, **characterized in that** the metal particles (10, 16) are passivated.

11. Pipe (2) according to one of the preceding claims, **characterized in that** the wall (4) has at least one further layer (26) in the manner of the first or second layer (6, 12).

12. Pipe (2) according to one of the preceding claims, **characterized in that** the wall (4) has a base layer (28) on which the first layer (6) of the wall (4) is applied.

13. Pipe (2) according to one of the preceding claims, **characterized in that** the layers (6, 12, 26) having an elastomeric carrier (8, 14) having metal particles (10, 16) which are arranged so as to be distributed are applied on top of one another.

14. Method for producing a pipe (2) having a multilayered wall (4), **characterized by**
- a first layer (6) composed of an elastomeric carrier material having metal particles (10) which are arranged so as to be distributed being applied on a base layer (28) of the wall (4), and
- at least one further layer (12) composed of an elastomeric carrier material having metal particles (16) which are arranged so as to be distributed being applied on the first layer (6).

## Revendications

1. Tube (2) comprenant
- une paroi multicouche (4),
**caractérisé en ce que**
- une première couche (6) de la paroi (4) comporte un support élastomère (8) pourvu de particules métalliques (10) disposées de manière répartie,
- une deuxième couche (12) de la paroi (4) comporte un support élastomère (14) pourvu de particules métalliques (16) disposées de manière répartie,
- les particules métalliques (10) de la première couche (6) sont disposées de manière à chevaucher les particules métalliques (16) de la deuxième couche (12), et
- les particules métalliques (10) de la première couche (6) sont disposées de manière décalée par rapport aux particules métalliques (16) de la deuxième couche (12) dans la direction axiale A et/ou la direction circonférentielle U.

2. Tube (2) selon la revendication précédente, **caractérisé en ce que** des particules métalliques (10) de la première couche (6) et des particules métalliques (16) de la deuxième couche (12) se chevauchent à au moins 50 %.

3. Tube (2) selon l'une des revendications précédentes, **caractérisé en ce que** la surface en coupe transversale cumulée des particules métalliques (10, 16) dans le support associé respectif (8, 14) correspond à au moins 70 % d'une surface d'enveloppe de la couche associée respective (6, 12).

4. Tube (2) selon l'une des revendications précédentes, **caractérisé en ce que** deux particules métalliques adjacentes (10a, 10b, 16a, 16b) d'une couche commune (6, 12) sont séparées à chaque fois par une portion d'espacement (22, 24) formée par le support associé (8, 14), les portions d'espacement (22) de la première couche (6) étant disposées en étant décalées des portions d'espacement (24) de la deuxième couche (12) dans la direction axiale A et/ou la direction circonférentielle U.

5. Tube (2) selon la revendication précédente, **caractérisé en ce que** les portions d'espacement (22) de la première couche (6) sont recouvertes par les plaquettes métalliques (16) de la deuxième couche (12).

6. Tube (2) selon l'une des revendications précédentes, **caractérisé en ce que** les particules métalliques (10, 16) sont réalisées sous la forme de plaquettes métalliques ayant chacune une épaisseur moyenne D de 0,5 µm à 5 µm et/ou un diamètre moyen M de 10 µm à 250 µm.

7. Tube (2) selon l'une des revendications précédentes, **caractérisé en ce qu'**une épaisseur de couche moyenne de chaque couche (6, 12) comportant un support élastomère (8, 14) pourvu de particules métalliques (10, 16) disposées de manière répartie est comprise entre 1,5 fois et 5 fois l'épaisseur moyenne D des particules métalliques associées (10, 16).

8. Tube (2) selon l'une des revendications précédentes, **caractérisé en ce que** les particules métalliques (10, 16) sont disposées de manière répartie aléatoirement dans le support associé respectif (8, 24) .

9. Tube (2) selon l'une des revendications précédentes, **caractérisé en ce que** les particules métalliques (10, 16) sont réalisées sous la forme de particules métalliques en aluminium.

10. Tube (2) selon l'une des revendications précédentes, **caractérisé en ce que** les particules métalliques (10, 16) sont passivées.

11. Tube (2) selon l'une des revendications précédentes, **caractérisé en ce que** la paroi (4) comporte au moins une autre couche (26) à la manière de la première ou de la deuxième couche (6, 12).

12. Tube (2) selon l'une des revendications précédentes, **caractérisé en ce que** la paroi (4) comporte une couche de base (28) sur laquelle la première couche (6) de la paroi (4) est appliquée.

13. Tube (2) selon l'une des revendications précédentes, **caractérisé en ce que** les couches (6, 12, 26) comportant un support élastomère (8, 14) pourvu de particules métalliques (10, 16) disposées de manière répartie sont appliquées les unes sur les autres.

14. Procédé de fabrication d'un tube (2) à paroi multicouche (4), **caractérisé par** les étapes suivantes
- appliquer une première couche (6) en matériau de support élastomère pourvu de particules métalliques (10) disposées de manière répartie sur une couche de base (28) de la paroi (4), et
- appliquer au moins une autre couche (12) en matériau de support élastomère pourvu de particules métalliques (16) disposées de manière répartie sur la première couche (6).
